# EUROPEAN PATENT APPLICATION

(11) **EP 4 851 043 A1**
(43) Date of publication of application: **09.12.2026**
(21) Application number: 26171635.1
(22) Date of filing: 10.04.2026
(51) Int. Cl.: B64D 11/06, B60R 22/26, B60R 22/02

(54) **ASYMMETRICAL FOUR-POINT SHOULDER BELT**

(30) Priority: 05.05.2025 US 202519198390
(71) Applicant: Elevate Aircraft Seating LLC, Bothell, WA 98011 (US)
(72) Inventor: Reichel, Uwe, Bothell, 98011 (US); Fenske, Viktor, Bothell, 98011 (US); Nitzko, Matthias, Bothell, 98011 (US); Emrich, Holger, Bothell, 98011 (US)
(74) Representative: Arnold & Siedsma

(57) **Abstract**

An asymmetrical four-point shoulder belt harness for an oblique seat for an aircraft. The shoulder belt harness includes a first shoulder belt, a second shoulder belt, a lap belt, and a buckle. The first shoulder belt extends from a first side of a backrest of the oblique seat to the buckle while the second shoulder belt extends from a second side of the backrest to the buckle. The lap belt is connected to the first side of the oblique seat and extends to the buckle. An attachment point positioned on the second side of the oblique seat releasably engages the buckle. During a deceleration of the aircraft, the first shoulder belt applies a first restraint pressure and the second shoulder belt applies a second restraint pressure, where the first restraint pressure and the second restraint pressure flank a centerline of the passenger seated in the oblique seat.

## Description

### BACKGROUND INFORMATION

### 1. Field:

The present disclosure relates generally to a passenger suite of an aircraft. More specifically, the present disclosure relates to a seatbelt for oblique arranged business class seats of an aircraft.

### 2. Background:

Oblique aircraft seating arrangements are utilized to maximize seating numbers and provide privacy separation in the limited space of a business class passenger suite of an aircraft. Oblique aircraft seats are side-facing seats oriented at an angle relative to the aircraft's longitudinal centerline. Oblique aircraft seats are often installed at angles of 20-50 degrees to the aircraft's centerline. Typically, oblique aircraft seats utilize a 3-point restraint system similar to what is found in today's automobile. A shoulder belt of the 3-point restraint system is anchored at the passenger's clavicle and crosses the passenger's chest/neck to a buckle positioned on the hip of the passenger on an opposite side of the passenger from where the shoulder belt originated. A lap belt originates on one hip of the passenger and is joined to the shoulder belt at the buckle across the lap of the passenger. In the event of a sudden deceleration, the typical 3-point restraint system places unwanted pressure on the chest and neck area of the passenger.

Therefore, it would be desirable to have a method and apparatus that takes into account at least some of the issues discussed above, as well as other possible issues.

### SUMMARY

An illustrative example of the present disclosure provides a shoulder belt harness for an oblique seat for an aircraft. The shoulder belt harness includes a first shoulder belt, a second shoulder belt, a lap belt, and a buckle. The first shoulder belt extends from, and is preferably connected to, a first side of a backrest of the oblique seat to the buckle while the second shoulder belt extends from, and is preferably connected to, a second side of the backrest to the buckle. The lap belt is connected to the first side of the oblique seat and extends to the buckle. An attachment point positioned on the second side of the oblique seat releasably engages the buckle.

The second side of the oblique seat may be forward of the first side of the oblique seat along a direction of travel axis of the aircraft. A centerline axis of the oblique seat may be angled in a range of 30-50 degrees from a direction of travel axis of the aircraft. The first shoulder belt may be connected to a first retractor on the first side of the backrest of the oblique seat. The second shoulder belt may be connected to a second retractor on the second side of the backrest connected to a baseplate of the oblique seat. The attachment point may comprise a belt connected to the second side of the oblique seat and a receiver connected to the belt, the receiver may be configured to releasably engage the buckle. Preferably, a neck of a passenger seated in the oblique seat does not engage the first shoulder belt or the second shoulder belt in the event of a reduction of velocity of the aircraft in a direction of travel of the aircraft. During a reduction of velocity of the aircraft in a direction of travel of the aircraft, a first restraint pressure provided by the first shoulder belt and a second restraint pressure provided by the second shoulder belt may flank a centerline of a passenger seated in the oblique seat.

Another illustrative example of the present disclosure provides a passenger suite for an aircraft. The passenger suite includes an oblique seat, a first shoulder belt, a second shoulder belt, and a lap belt. The oblique seat has a first side, a second side, a seat portion, and a backrest portion. The first shoulder belt extends from the first side of the backrest portion. The second shoulder belt extends from the second side of the backrest portion. The lap belt extends from the first side of the seat portion. The first shoulder belt, the second shoulder belt, and the lap belt are all connected to an attachment point on the second side of the seat portion.

The passenger suite may further comprise a buckle connected to each of the first shoulder belt, the second shoulder belt, and the lap belt, wherein the buckle is releasably engaged with the attachment point. The second side of the oblique seat may be forward of the first side of the oblique seat along a direction of travel axis of the aircraft. A centerline axis of the oblique seat may be angled in a range of 30-50 degrees from a direction of travel axis of the aircraft. The oblique seat may comprise a first retractor mounted on the first side of the backrest portion and connected to the first shoulder belt. The oblique seat may comprise a second retractor mounted to a baseplate of the oblique seat, the second retractor connected to the second shoulder belt. The attachment point may comprises a buckle connected to the first shoulder belt, the second shoulder belt, and the lap belt, and a belt connected to the second side of the seat portion and a receiver connected to the belt, the receiver configured to releasably engage the buckle. During a reduction of velocity of the aircraft in a direction of travel of the aircraft, a first restraint pressure provided by the first shoulder belt and a second restraint pressure provided by the second shoulder belt may flank a centerline of a passenger seated in the oblique seat.

A further illustrative example of the present disclosure provides a method for restraining a passenger in an oblique aircraft seat of an aircraft, preferably using the shoulder belt harness and/or passenger suite according to any one of the above examples. A first shoulder belt is extended from a first side of a backrest of the oblique aircraft seat to a buckle. A second shoulder belt is extended from a second side of the backrest of the oblique aircraft seat to the buckle. A lap belt is extended from the first side of the oblique aircraft seat to the buckle. The buckle is engaged with an attachment point on the second side of the oblique aircraft seat, wherein the second side of the oblique aircraft seat is forward of the first side of the oblique aircraft seat along a direction of travel axis of the aircraft.

The extending the first shoulder belt may comprise extending the first shoulder belt from a first retractor connected to the first side of the backrest of the oblique aircraft seat and the extending the second shoulder belt comprises extending the second shoulder belt from a second retractor connected to a baseplate connected to the second side of the backrest of the oblique aircraft seat. The method may further comprise retracting the first shoulder belt into the first retractor to position the first shoulder belt against the passenger, and retracting the second shoulder belt into the second retractor to position the second shoulder belt against the passenger. The method may further comprise, during a reduction of velocity of the aircraft in a direction of travel of the aircraft, applying a first restraint pressure provided by the first shoulder belt and applying a second restraint pressure provided by the second shoulder belt to the passenger, where the first restraint pressure and the second restraint pressure flank a centerline of the passenger seated in the oblique aircraft seat.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of a block diagram of a platform in accordance with an illustrative example;
**Figure 2** is an illustration of a top view of an oblique seat for an aircraft in accordance with an illustrative example;
**Figure 3** is an illustration of a perspective view from behind an oblique seat for an aircraft in accordance with an illustrative example;
**Figure 4** is an illustration of a flowchart of a process for restraining a passenger in an oblique aircraft seat of an aircraft in accordance with an illustrative example;
**Figure 5** is an illustration of a block diagram of an aircraft manufacturing and service method in accordance with an illustrative example; and
**Figure 6** is an illustration of a block diagram of an aircraft in which an illustrative example may be implemented.

### DETAILED DESCRIPTION

The illustrative examples recognize and take into account one or more different considerations. For example, the illustrative examples recognize and take into account that passenger suite layouts for commercial aircraft, particularly business class seats and up, often incorporate oblique seats for efficient use of space and to provide privacy between passengers seated in the passenger suite.

The illustrative examples also recognize and take into account that typical three-point restraint system contact and cross a passenger's chest and neck area. In the event of a sudden deceleration, the typical 3-point restraint system places unwanted pressure on the chest and neck area of the passenger.

Thus, the illustrative examples provide an asymmetrical four-point shoulder belt for an oblique aircraft seat that includes shoulder belts that do not contact a passenger's neck. The illustrative examples provide an asymmetrical four-point shoulder belt for an oblique aircraft seat that in the event of a sudden deceleration, the space between the shoulder belts and the neck of the passenger remains within the permitted limits while still securing the passenger in place in the oblique aircraft seat.

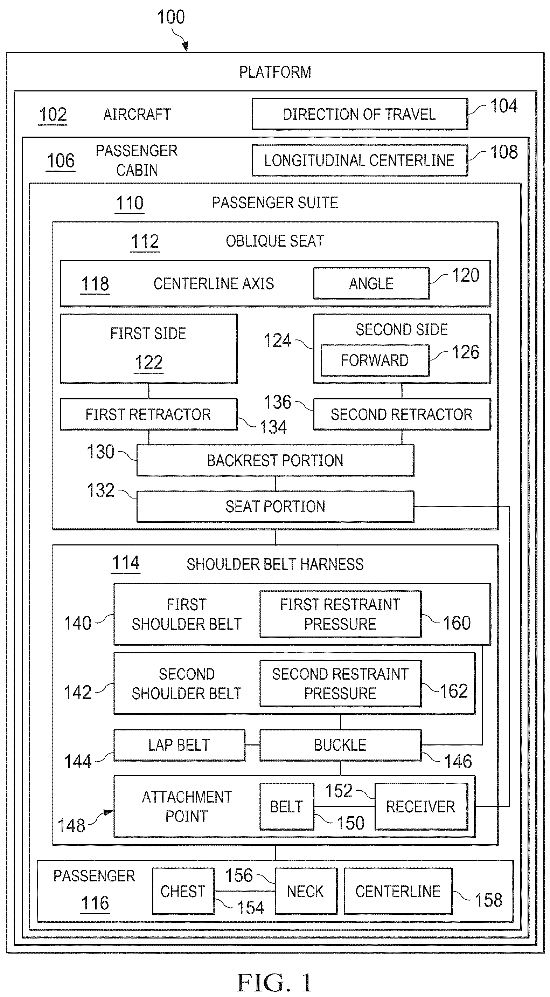

With reference now to the figures and, in particular, with reference to **Figure 1****,** an illustration of a block diagram of a platform is depicted in accordance with an illustrative example. Platform **100** has aircraft **102** in this illustrative example.

The illustration of aircraft **102** in **Figure 1** is not meant to imply physical or architectural limitations to the manner in which an illustrative example may be implemented. For example, although aircraft **102** may be a commercial aircraft, aircraft **102** may be a military aircraft, a rotorcraft, a helicopter, an unmanned aerial vehicle, or any other suitable aircraft that includes an armrest assembly.

Although the illustrative examples are described with respect to an aircraft, the illustrative example may be applied to other types of platforms. The platform may be, for example, a mobile platform, a stationary platform, a land-based structure, an aquatic-based structure, or a space-based structure. More specifically, the platform may be an aircraft, a surface ship, a tank, a personnel carrier, a train, a spacecraft, a space station, a satellite, a submarine, an automobile, a power plant, a bridge, a dam, a house, a manufacturing facility, a building, a tool, a mechanical structure, or some other suitable platform or structure where a shoulder belt harness is desirable.

In this illustrative example, platform **100** takes the form of aircraft **102.** In this illustrative example, when platform **100** takes the form of aircraft **102,** aircraft **102** includes direction of travel **104.** Direction of travel **104,** or the direction of travel axis, is the, generally linear, direction the aircraft flies when operating. As will be discussed below, the orientation of the oblique aircraft seat and the features of the shoulder belt harness are all dependent on the particular direction of direction of travel **104.**

Aircraft **102** includes passenger cabin **106.** Passenger cabin **106** typically runs longitudinal along the length of aircraft **102** and leads to at least one passenger suite **110.** As a result, passenger cabin **106** has longitudinal centerline **108.** Generally, longitudinal center line **108** is parallel with direction of travel **104.**

Passenger suite **110** includes at least one oblique seat **112.** Oblique seat **112** is fitted with shoulder belt harness **114.** Shoulder belt **114** safely secures passenger **116** in oblique seat **112.** Passenger suite **110** may include more than one oblique seat **112** each with a corresponding shoulder belt harness **114.** Oblique aircraft seating arrangements are utilized to maximize seating capacity and provide privacy separation in the limited space of passenger suite **110.** An oblique seat is considered a side-facing seat having a centerline axis oriented at an angle relative to the aircraft's longitudinal centerline. Oblique seat **112** has centerline axis **118.** Centerline axis **118** is oriented at angle **120** from direction of travel **104** or longitudinal centerline **108.** Angle **120** may range from 20-50 degrees relative to direction of travel **104** or longitudinal centerline **108.** The optimal angle will be determined by space constraints and seating capacity requirement of a particular aircraft.

Because the orientation and features of oblique seat **112** and shoulder belt harness **114** are important to the operation of oblique seat **112** and shoulder belt harness **114,** it will be necessary to describe features relative to positional sides of the seat and direction of travel **104.** As a result, oblique seat **112** has first side **122** and second side **124.** Because oblique seat **112** is oriented at angle **120** relative to direction of travel **104,** second side **124** is forward **126** of first side **122** along direction of direction of travel **104.** This orientation is important when describing the location of other features of oblique seat **112** and shoulder belt harness **114** to be discussed below.

Oblique seat **112** includes backrest portion **130** connected to seat portion **132.** Backrest portion **130** supports the back of a passenger seated in oblique seat **112** while seat portion **132** supports the main weight of the passenger seated in oblique seat **112.** First side **122** and second side **124** are opposite lateral sides of oblique seat **112.** As a result, first side **122** and second side **124** also apply to backrest portion **130** and seat portion **132.**

First retractor **134** is mounted to backrest portion **130** on first side **122.** Second retractor **136** is mounted to backrest portion **130** on second side **124.** First retractor **134** and second retractor **136** operate as typical, pre-tensioning seat belt retractors do.

Shoulder belt harness **114** includes first shoulder belt **140,** second shoulder belt **142,** lap belt **144,** buckle **146** and attachment point **148.**

One end of first shoulder belt **140** is connected to first retractor **134.** The opposite end of first shoulder blet **140** is connected to buckle **146.** One end of second shoulder belt **142** is connected to second retractor **136.** The opposite end of second shoulder belt **142** is connected to buckle **146.** One end of lap belt **144** is connected to first side **122** of seat portion **132.** The opposite end of lap belt **144** is connected to buckle **146.** Attachment point **148** is positioned on second side **124** of seat portion **132** of oblique seat **112.** Attachment point **148** may be connected to seat portion **132** or may be connected to other structural elements of oblique seat **112.** It is important that attachment point is positioned on second side **124** of oblique seat **112.** Attachment point **148** includes belt **150** and receiver **152** connected to belt **150.** Receiver **152** operates to releasably engage buckle **146.** Since first shoulder belt **140,** second shoulder belt **142** and lap belt **144** are all connected to buckle **146,** attachment point **148** is a releasable attachment point for first shoulder belt **140,** second shoulder belt **142** and lap belt **144** to second side **124** of oblique seat **112.**

Passenger **116** is an example of a passenger capable of sitting in oblique seat **112** during operation of aircraft **102.** Passenger **116** includes chest **154** connected to neck **156.** Passenger **116** has centerline **158.** Centerline **158** can be described as the vertical midline that passes through chest **154** and neck **156.**

In use, because of the specific connection locations of first shoulder belt **140,** second shoulder belt **142** and lap belt **144** relative to the specific sides of oblique seat **112,** during a deceleration event, first restraint pressure **160** provided by first shoulder belt **140** on passenger **116** and second restraint pressure **162** provided by second shoulder belt **142** on passenger **116** flank centerline **158** of passenger **116.** During a deceleration event, the momentum of passenger **116** wants to keep moving passenger **116** in direction of travel **104.** Because of the specific connection locations of first shoulder belt **140,** second shoulder belt **142** and lap belt **144** relative to the specific sides of oblique seat **112** which are determined by the direction of travel, the locations of where first restraint pressure **160** and second restraint pressure **162** are applied do not put undue stress on neck **156** of passenger **116.**

As used herein, a first component "connected to" or "coupled to" or "associated with" a second component means that the first component can be connected directly or indirectly to the second component. The connection is a physical association. In other words, additional components may be present between the first component and the second component. The first component is considered to be indirectly connected to the second component when one or more additional components are present between the two components. When the first component is directly connected to the second component, no additional components are present between the two components.

For example, a first component can be considered to be physically connected to a second component by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

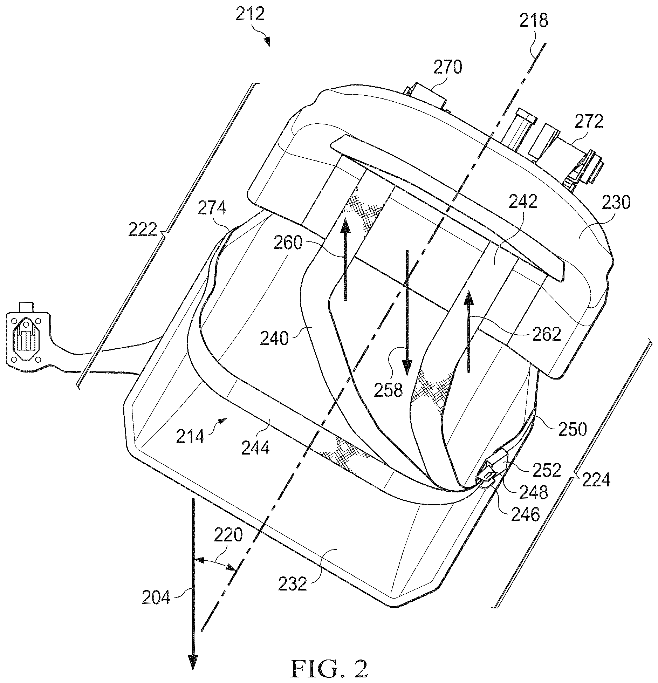

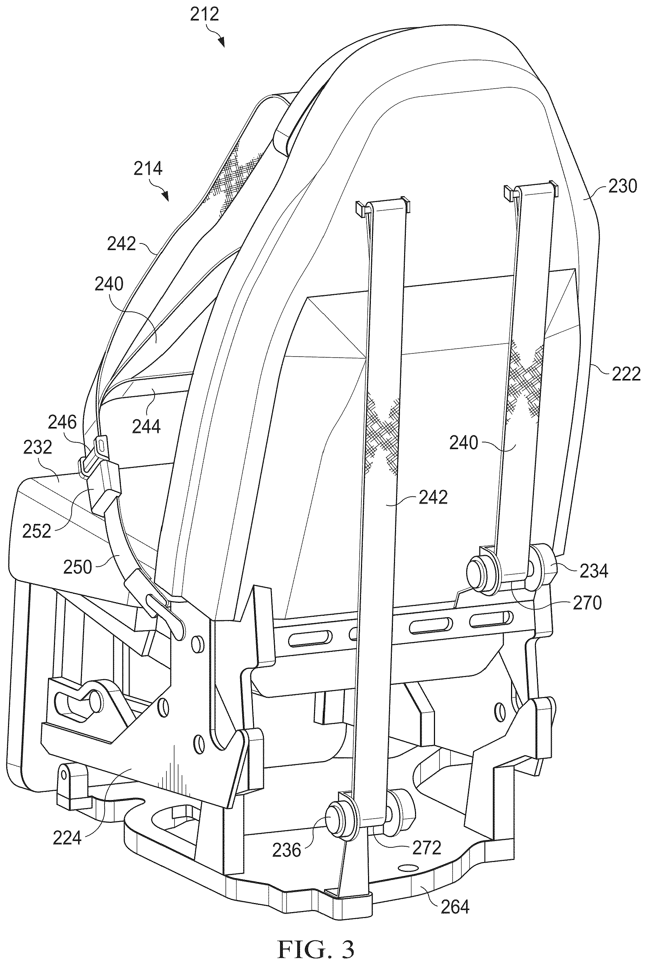

With reference next to **Figures 2** and **3****,** illustrations of an oblique seat for an aircraft are depicted in accordance with an illustrative example. In this illustrative example and the illustrative examples that follow, the same reference numeral may be used in more than one figure. This reuse of a reference numeral in different figures represents the same element in the different figures. The components illustrated in **Figure 2** are examples of physical implementations of oblique seat **112** and shoulder belt harness **114** shown in block form in **Figure 1****.**

Oblique seat **212** has centerline axis **218.** Centerline axis **218** is oriented at angle **220** from direction of travel **204.** Angle **220** may range from 20-50 degrees relative to direction of travel **204.** The optimal angle will be determined by space constraints and seating capacity requirement of a particular aircraft.

Oblique seat **212** has first side **222** and second side **224.** Because oblique seat **212** is oriented at angle **220** relative to direction of travel **204,** second side **224** is forward of first side **222** along the direction of direction of travel **204.** This orientation is important when describing the location of other features of oblique seat **212** and shoulder belt harness **214.**

Oblique seat **212** includes backrest portion **230** connected to seat portion **232.** Backrest portion **230** supports the back of a passenger seated in oblique seat **212** while seat portion **232** supports the underside or the main weight of the passenger seated in oblique seat **212.** First side **222** and second side **224** are opposite lateral sides of oblique seat **212.** First side **222** and second side **224** orientations also apply to backrest portion **230** and seat portion **232.**

First retractor **234** is mounted to backrest portion **230** on first side **222.** Second retractor **236** is mounted to baseplate **264** of backrest portion **230** on second side **224.** First retractor **234** and second retractor **236** operate as typical, pre-tensioning seat belt retractors do.

Shoulder belt harness **214** includes first shoulder belt **240,** second shoulder belt **242,** lap belt **244,** buckle **246** and attachment point **248.**

End **270** of first shoulder belt **240** is connected to first retractor **234.** The opposite end of first shoulder belt **240** is connected to buckle **246.** End **272** of second shoulder belt **242** is connected to second retractor **236.** The opposite end of second shoulder belt **242** is connected to buckle **246.** End **274** of lap belt **244** is connected to first side **222** of seat portion **232.** The opposite end of lap belt **244** is connected to buckle **246.** Attachment point **248** is positioned on second side **224** of seat portion **232** of oblique seat **212.** Attachment point **248** may be connected to seat portion **232** or may be connected to other structural elements of oblique seat **212** as long as attachment point is positioned on second side **224.** It is important that attachment point is positioned on second side **224** of oblique seat **212.** Attachment point **248** includes belt **250** and receiver **252** connected to belt **250.** Receiver **252** operates to releasably engage buckle **246.** Since first shoulder belt **240,** second shoulder belt **242,** and lap belt **244** are all connected to buckle **246,** attachment point **248** is a releasable attachment point for first shoulder belt **240,** second shoulder belt **242** and lap belt **244** to second side **224** of oblique seat **212.**

As illustrated, because of the direction of direction of travel **204,** first side **222** may be considered the right-hand side of a passenger seated in oblique seat **212** and second side **224** may be considered the left-hand side. It is important, based on the illustrated direction of travel **204,** that attachment point **248** is on second side **224,** or in this illustrated example, the left-hand side of oblique seat **212.** Should oblique seat be positioned on an opposite side of a passenger cabin and be angled in an opposite direction as to that depicted in **Figure 2****,** the features of shoulder belt harness **214** and the locations of connections relative to the sides of the oblique seat would need to be the mirror opposite as to what is described above.

In the case of deceleration of the aircraft, momentum of a passenger seated inside the aircraft will tend to move the mass of the passenger in a direction parallel with direction of travel **204.** Arrow **258** represents movement of the centerline of the passenger, the centerline including the neck of the passenger. The momentum causes first restraint pressure (indicated by arrow **260)** and second restraint pressure (indicated by arrow **262)** to be applied to a passenger seated in oblique seat **212.** What is important is that first restraint pressure **260** provided by first shoulder belt **240** and second restraint pressure **262** provided by second shoulder belt **242** flank centerline **258** of the passenger. Because of the specific connection locations of first shoulder belt **240,** second shoulder belt **242** and lap belt **244** relative to the direction of travel **204,** the locations of where first restraint pressure **260** and second restraint pressure **262** are applied do not put undue stress on the neck of a passenger seated in oblique seat **212.**

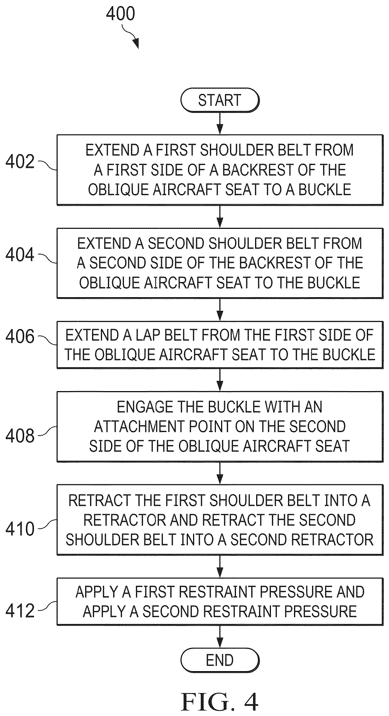

With reference next to **Figure 4****,** an illustration of a flowchart of a process **600** for restraining a passenger in an oblique aircraft seat of an aircraft is depicted in accordance with an illustrative example. The method depicted in **Figure 4** may be used in conjunction with the oblique seat and shoulder belt harness depicted in **Figures 1-3****.**

The process begins by extending a first shoulder belt from a first side of a backrest of the oblique aircraft seat to a buckle (operation **402).** The first shoulder belt is unfurled from a first retractor positioned on the first side of a backrest portion of the oblique aircraft seat. The process continues by extending a second shoulder belt from a second side of the backrest of the oblique aircraft seat to the buckle (operation **404).** The second shoulder belt is unfurled from a second retractor positioned on the second side of a backrest portion of the oblique aircraft seat. At operation **406,** a lap belt is extended from the first side of the oblique aircraft seat to the buckle. At operation **408,** the buckle is releasably engaged with an attachment point located on the second side of the oblique aircraft seat. The second side of the oblique aircraft seat is forward of the first side of the oblique aircraft seat along a direction of travel axis of the aircraft. At operation **610,** the process continues by retracting the first shoulder belt into the first retractor to position the first shoulder belt against the passenger and retracting the second shoulder belt into the second retractor to position the second shoulder belt against the passenger. At operation **612,** during a reduction of velocity of the aircraft, a first restraint pressure provided by the first shoulder belt and a second restraint pressure provided by the second shoulder belt is applied to the passenger. The first restraint pressure and the second restraint pressure flank a centerline of the passenger seated in the oblique aircraft seat. The process ends thereafter.

In some alternative implementations of an illustrative example, the function or functions noted in the blocks may not be necessary or may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

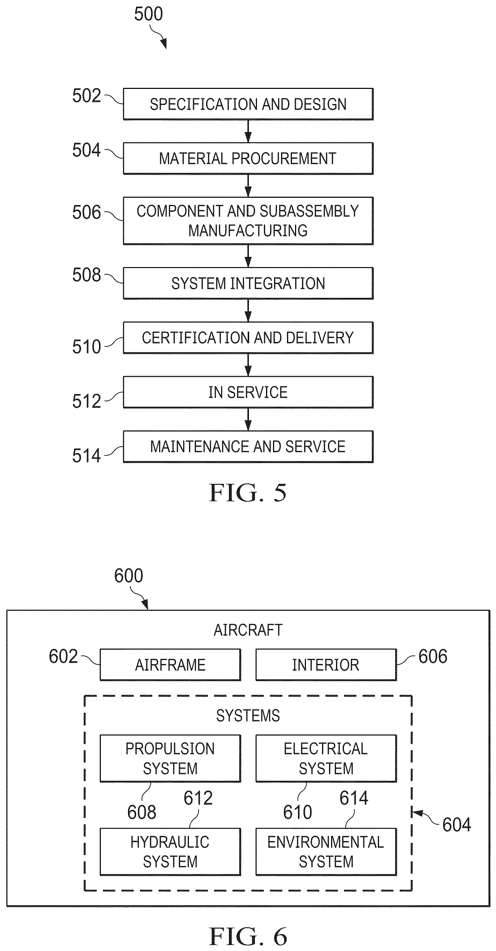

The illustrative examples of the disclosure may be further described in the context of aircraft manufacturing and service method **500** as shown in **Figure 5** and aircraft **600** as shown in **Figure 6****.** Turning first to **Figure 5****,** an illustration of a block diagram of an aircraft manufacturing and service method is depicted in accordance with an illustrative example. During pre-production, aircraft manufacturing and service method **500** may include specification and design **502** of aircraft **600** in **Figure 6** and material procurement **504**.

During production, component and subassembly manufacturing **506** and system integration **508** of aircraft **600** in **Figure 6** takes place. Thereafter, aircraft **600** in **Figure 6** may go through certification and delivery **510** in order to be placed in service **512.** While in service **512** by a customer, aircraft **600** in **Figure 6** is scheduled for routine maintenance and service **514,** which may include modification, reconfiguration, refurbishment, and other maintenance, service, or inspection.

The apparatus of this disclosure may be installed on an aircraft during component and subassembly manufacturing **506.** In addition, the apparatus of this disclosure may be retrofitted onto aircraft **600** in **Figure 6** during routine maintenance and service **514** as part of a modification, reconfiguration, or refurbishment of aircraft **600** in **Figure 6****.**

Each of the processes of aircraft manufacturing and service method **500** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers, and an operator may be an airline, a leasing company, a military entity, a service organization, and so on.

With reference now to **Figure 6****,** an illustration of a block diagram of an aircraft is depicted in which an illustrative example may be implemented. In this example, aircraft **600** is produced by aircraft manufacturing and service method **500** in **Figure 5** and may include airframe **602** with plurality of systems **604** and interior **606.** Examples of systems **604** include one or more of propulsion system **608,** electrical system **610,** hydraulic system **612,** and environmental system **614.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **500** in **Figure 5****.** In one illustrative example, components or subassemblies produced in component and subassembly manufacturing **506** in **Figure 5** may be fabricated or manufactured in a manner similar to components or subassemblies produced while aircraft **600** is in service **512** in **Figure 5****.** As yet another example, one or more apparatus examples, method examples, or a combination thereof may be utilized during production stages, such as component and subassembly manufacturing **506** and system integration **508** in **Figure 5****.** One or more apparatus examples, method examples, or a combination thereof may be utilized while aircraft **600** is in service **512,** during maintenance and service **514,** inclusive of inspection, in **Figure 5****,** or both. The use of a number of the different illustrative examples may substantially expedite the assembly of aircraft **600,** reduce the cost of aircraft **600,** or both expedite the assembly of aircraft **600** and reduce the cost of aircraft **600.**

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. A shoulder belt harness (114) for an oblique seat (112) for an aircraft (102), comprising:
   a first shoulder belt (140) connected to and extending from a first side (122) of a backrest (130) of the oblique seat (112) to a buckle (146);
   a second shoulder belt (142) connected to and extending from a second side (124) of the backrest (130) of the oblique seat (112) to the buckle (146);
   a lap belt (144) connected to and extending from the first side (122) of the oblique seat (112) to the buckle (146); and
   an attachment point (148) positioned on the second side (124) of the oblique seat (112), the attachment point (148) for releasable engagement with the buckle (146).
2. The shoulder belt harness of clause 1, wherein the second side (124) of the oblique seat (112) is forward (126) of the first side (122) of the oblique seat (112) along a direction of travel axis (104) of the aircraft (102).
3. The shoulder belt harness of clause 1 or 2, wherein a centerline axis (118) of the oblique seat (112) is angled (120) in a range of 30-50 degrees from a direction of travel axis (104) of the aircraft (102).
4. The shoulder belt harness of any one of the preceding clauses, wherein the first shoulder belt (140) is connected to a first retractor (134) on the first side (122) of the backrest (130) of the oblique seat (112).
5. The shoulder belt harness of clause 4, wherein the second shoulder belt (142) is connected to a second retractor (136) on the second side (124) of the backrest (130) connected to a baseplate (264) of the oblique seat (112).
6. The shoulder belt harness of any one of the preceding clauses, wherein the attachment point (148) comprises a belt (150) connected to the second side (124) of the oblique seat (112) and a receiver (152) connected to the belt (150), the receiver (152) configured to releasably engage the buckle (146).
7. The shoulder belt harness of any one of the preceding clauses, wherein a neck (156) of a passenger (116) seated in the oblique seat (112) does not engage the first shoulder belt (140) or the second shoulder belt (142) in the event of a reduction of velocity of the aircraft (102) in a direction of travel (104) of the aircraft (102).
8. The shoulder belt harness of any one of the preceding clauses, wherein during a reduction of velocity of the aircraft (102) in a direction of travel (104) of the aircraft, a first restraint pressure (160) provided by the first shoulder belt (140) and a second restraint pressure (162) provided by the second shoulder belt (142) flank a centerline (158) of a passenger (116) seated in the oblique seat (112).
9. A passenger suite for an aircraft, comprising:
   an oblique seat (112) comprising a first side (122), a second side (124), a seat portion (132), and a backrest portion (130);
   a first shoulder belt (140) extending from the first side (122) of the backrest portion (130);
   a second shoulder belt (142) extending from the second side (124) of the backrest portion (130);
   a lap belt (144) extending from the first side (122) of the seat portion (132); and
   the first shoulder belt (140), the second shoulder belt (142), and the lap belt (144) all connected to an attachment point (148) on the second side (124) of the seat portion (132).
10. The passenger suite of clause 9, further comprising:
   a buckle (146) connected to each of the first shoulder belt (140), the second shoulder belt (142), and the lap belt (144), the buckle (146) releasably engaged with the attachment point (148).
11. The passenger suite of clause 9 or 10, wherein the second side (124) of the oblique seat (112) is forward (126) of the first side (122) of the oblique seat (112) along a direction of travel axis (104) of the aircraft (102).
12. The passenger suite of any one of clauses 9-11, wherein a centerline axis (118) of the oblique seat is angled (120) in a range of 30-50 degrees from a direction of travel axis (104) of the aircraft (102).
13. The passenger suite of any one of clauses 9-12, wherein the oblique seat comprises:
   a first retractor (134) mounted on the first side (122) of the backrest portion (130) and connected to the first shoulder belt (140).
14. The passenger suite of clause 13, wherein the oblique seat comprises:
   a second retractor (136) mounted to a baseplate (264) of the oblique seat (112), the second retractor (136) connected to the second shoulder belt (142).
15. The passenger suite of any one of clauses 9-14, wherein the attachment point comprises:
   a buckle (146) connected to the first shoulder belt (140), the second shoulder belt (142), and the lap belt (144); and
   a belt (150) connected to the second side (124) of the seat portion (132) and a receiver (152) connected to the belt (150), the receiver (152) configured to releasably engage the buckle (146).
16. The passenger suite of any one of clauses 9-15, wherein during a reduction of velocity of the aircraft in a direction of travel (104) of the aircraft (102), a first restraint pressure (160) provided by the first shoulder belt (140) and a second restraint pressure (162) provided by the second shoulder belt (142) flank a centerline (158) of a passenger (116) seated in the oblique seat (112).
17. A method for restraining a passenger in an oblique aircraft seat of an aircraft, comprising:
   extending (402) a first shoulder belt (140) from a first side (122) of a backrest (130) of the oblique aircraft seat (112) to a buckle (146);
   extending (404) a second shoulder belt (142) from a second side (124) of the backrest (130) of the oblique aircraft seat (112) to the buckle (146);
   extending (406) a lap belt (144) from the first side (122) of the oblique aircraft seat (112) to the buckle (146); and
   engaging (408) the buckle (146) with an attachment point (148) on the second side (124) of the oblique aircraft seat (112), wherein the second side (124) of the oblique aircraft seat (112) is forward (126) of the first side (122) of the oblique aircraft seat (112) along a direction of travel axis (104) of the aircraft (102).
18. The method of clause 17, wherein the extending (402) the first shoulder belt (140) comprises extending the first shoulder belt (140) from a first retractor (134) connected to the first side (122) of the backrest (130) of the oblique aircraft seat (112) and the extending (404) the second shoulder belt (142) comprises extending the second shoulder belt (142) from a second retractor (136) connected to a baseplate (264) connected to the second side (124) of the backrest (130) of the oblique aircraft seat (112).
19. The method of clause 18, further comprising:
   retracting (410) the first shoulder belt (140) into the first retractor (134) to position the first shoulder belt (140) against the passenger (116); and
   retracting (410) the second shoulder belt (142) into the second retractor (136) to position the second shoulder belt (142) against the passenger (116).
20. The method of any one of clauses 17-19, further comprising:
   during a reduction of velocity of the aircraft (102) in a direction of travel (104) of the aircraft (102), applying (412) a first restraint pressure (160) provided by the first shoulder belt (140) and applying (412) a second restraint pressure (162) provided by the second shoulder belt (142) to the passenger (116), where the first restraint pressure (160) and the second restraint pressure (162) flank a centerline (158) of the passenger (116) seated in the oblique aircraft seat (112).

## Claims

1. A shoulder belt harness (114) for an oblique seat (112) for an aircraft (102), comprising:
a first shoulder belt (140) connected to and extending from a first side (122) of a backrest (130) of the oblique seat (112) to a buckle (146);
a second shoulder belt (142) connected to and extending from a second side (124) of the backrest (130) of the oblique seat (112) to the buckle (146);
a lap belt (144) connected to and extending from the first side (122) of the oblique seat (112) to the buckle (146); and
an attachment point (148) positioned on the second side (124) of the oblique seat (112), the attachment point (148) for releasable engagement with the buckle (146).

2. The shoulder belt harness of claim 1, wherein the second side (124) of the oblique seat (112) is forward (126) of the first side (122) of the oblique seat (112) along a direction of travel axis (104) of the aircraft (102).

3. The shoulder belt harness of claim 1 or 2, wherein a centerline axis (118) of the oblique seat (112) is angled (120) in a range of 30-50 degrees from a direction of travel axis (104) of the aircraft (102).

4. The shoulder belt harness of any one of the preceding claims, wherein the first shoulder belt (140) is connected to a first retractor (134) on the first side (122) of the backrest (130) of the oblique seat (112).

5. The shoulder belt harness of claim 4, wherein the second shoulder belt (142) is connected to a second retractor (136) on the second side (124) of the backrest (130) connected to a baseplate (264) of the oblique seat (112).

6. The shoulder belt harness of any one of the preceding claims, wherein the attachment point (148) comprises a belt (150) connected to the second side (124) of the oblique seat (112) and a receiver (152) connected to the belt (150), the receiver (152) configured to releasably engage the buckle (146).

7. The shoulder belt harness of any one of the preceding claims, wherein a neck (156) of a passenger (116) seated in the oblique seat (112) does not engage the first shoulder belt (140) or the second shoulder belt (142) in the event of a reduction of velocity of the aircraft (102) in a direction of travel (104) of the aircraft (102).

8. The shoulder belt harness of any one of the preceding claims, wherein during a reduction of velocity of the aircraft (102) in a direction of travel (104) of the aircraft, a first restraint pressure (160) provided by the first shoulder belt (140) and a second restraint pressure (162) provided by the second shoulder belt (142) flank a centerline (158) of a passenger (116) seated in the oblique seat (112).

9. A passenger suite for an aircraft, comprising:
an oblique seat (112) comprising a first side (122), a second side (124), a seat portion (132), and a backrest portion (130);
a first shoulder belt (140) extending from the first side (122) of the backrest portion (130);
a second shoulder belt (142) extending from the second side (124) of the backrest portion (130);
a lap belt (144) extending from the first side (122) of the seat portion (132); and
the first shoulder belt (140), the second shoulder belt (142), and the lap belt (144) all connected to an attachment point (148) on the second side (124) of the seat portion (132).

10. The passenger suite of claim 9, wherein:
the passenger suite further comprises a buckle (146) connected to each of the first shoulder belt (140), the second shoulder belt (142), and the lap belt (144), the buckle (146) releasably engaged with the attachment point (148); and/or
the second side (124) of the oblique seat (112) is forward (126) of the first side (122) of the oblique seat (112) along a direction of travel axis (104) of the aircraft (102); and/or
a centerline axis (118) of the oblique seat is angled (120) in a range of 30-50 degrees from a direction of travel axis (104) of the aircraft (102).

11. The passenger suite of claim 9 or 10, wherein the oblique seat comprises:
a first retractor (134) mounted on the first side (122) of the backrest portion (130) and connected to the first shoulder belt (140), and the oblique seat preferably further comprising:
a second retractor (136) mounted to a baseplate (264) of the oblique seat (112), the second retractor (136) connected to the second shoulder belt (142).

12. The passenger suite of any one of claims 9-11, wherein:
the attachment point comprises a buckle (146) connected to the first shoulder belt (140), the second shoulder belt (142), and the lap belt (144), and a belt (150) connected to the second side (124) of the seat portion (132) and a receiver (152) connected to the belt (150), the receiver (152) configured to releasably engage the buckle (146); and/or
during a reduction of velocity of the aircraft in a direction of travel (104) of the aircraft (102), a first restraint pressure (160) provided by the first shoulder belt (140) and a second restraint pressure (162) provided by the second shoulder belt (142) flank a centerline (158) of a passenger (116) seated in the oblique seat (112).

13. A method for restraining a passenger in an oblique aircraft seat of an aircraft, comprising:
extending (402) a first shoulder belt (140) from a first side (122) of a backrest (130) of the oblique aircraft seat (112) to a buckle (146);
extending (404) a second shoulder belt (142) from a second side (124) of the backrest (130) of the oblique aircraft seat (112) to the buckle (146);
extending (406) a lap belt (144) from the first side (122) of the oblique aircraft seat (112) to the buckle (146); and
engaging (408) the buckle (146) with an attachment point (148) on the second side (124) of the oblique aircraft seat (112), wherein the second side (124) of the oblique aircraft seat (112) is forward (126) of the first side (122) of the oblique aircraft seat (112) along a direction of travel axis (104) of the aircraft (102).

14. The method of claim 13, wherein the extending (402) the first shoulder belt (140) comprises extending the first shoulder belt (140) from a first retractor (134) connected to the first side (122) of the backrest (130) of the oblique aircraft seat (112) and the extending (404) the second shoulder belt (142) comprises extending the second shoulder belt (142) from a second retractor (136) connected to a baseplate (264) connected to the second side (124) of the backrest (130) of the oblique aircraft seat (112), and preferably further comprising:
retracting (410) the first shoulder belt (140) into the first retractor (134) to position the first shoulder belt (140) against the passenger (116), and retracting (410) the second shoulder belt (142) into the second retractor (136) to position the second shoulder belt (142) against the passenger (116).

15. The method of claim 13 or 14, further comprising:
during a reduction of velocity of the aircraft (102) in a direction of travel (104) of the aircraft (102), applying (412) a first restraint pressure (160) provided by the first shoulder belt (140) and applying (412) a second restraint pressure (162) provided by the second shoulder belt (142) to the passenger (116), where the first restraint pressure (160) and the second restraint pressure (162) flank a centerline (158) of the passenger (116) seated in the oblique aircraft seat (112).
